Europäisches Patentamt

European Patent Office

Office européen des brevets

(11) Publication number: **0 172 903 B1**

# (12) EUROPEAN PATENT SPECIFICATION

(45) Date of publication of patent specification: **03.01.90**

(51) Int. Cl.⁵: **B 01 D 45/16, B 08 B 15/00**

(21) Application number: **85901450.8**

(22) Date of filing: **08.03.85**

(86) International application number:
**PCT/FI85/00025**

(87) International publication number:
**WO 85/04114 26.09.85 Gazette 85/21**

(54) **GREASE FILTER.**

(30) Priority: **09.03.84 FI 840978**

(43) Date of publication of application:
**05.03.86 Bulletin 86/10**

(45) Publication of the grant of the patent:
**03.01.90 Bulletin 90/01**

(84) Designated Contracting States:
**AT BE DE FR GB NL SE**

(56) References cited:
**DE-A-2 731 936**
**DE-A-2 731 996**
**DE-A-2 737 386**
**DE-B-2 718 611**
**US-A-3 566 585**
**US-A-3 813 856**
**US-A-3 834 135**
**US-A-3 910 782**

(73) Proprietor: **HALTON OY**
**SF-47400 Kausala (FI)**

(72) Inventor: **VARTIAINEN, Seppo**
**Kallantie 11 F 63**
**SF-45130 Kouvola (FI)**
Inventor: **AALTO, Erkki**
**Vatajantie 8 as 6**
**SF-47400 Kausala (FI)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

EP 0 172 903 B1

**Description**

The present invention concerns a grease filter according to claim 1.

An important field of use of air purifiers are the so-called grease filters. Through the grease filters is drawn spoilt air in connection with food preparation. In professional kitchens, such as restaurant, grill room and institutional kitchens, the air that is spoiled in connection with the preparation of food causes a special problem.

The grease filter separates grease and other impurities from the vapours and gases produced when food is being prepared and in this way prevents the entry of these inflammable and otherwise harmful substances in the ventilation system. The grease filter is most often placed in an air venting means over the stove or equivalent. Several grease filters may be used side by side.

The object of the grease filters is to prevent the duct systems and fans from becoming dirty and thus to reduce the need of cleaning the ventilation system and to improve fire safety and hygiene. The following requirements, among others, are imposed on a grease filter. Of course, good filtering capacity. The degree of self-cleaning of the filters based on running down of the accumulated grease should be as good as possible. The filter cleaning period should be long without increasing the resistivity of the filter or altering its cleaning efficiency. The filter should be easy to service and to inspect. The filter should present the highest possible fire safety and hygienic standard. The filter shall also be durable and user-friendly.

At present, so-called impact filters are commonly used for grease filter which consists of mutually superimposed metal nets or of nets and a metal fibre mat. A drawback of this kind of filters is that their separating capacity is usually too low. The filter need frequent servicing because the grease adheres to the filter material instead of running down into the grease groove. Cleaning is difficult. Said drawbacks, also have the consequence that the fire hazard increases, and the specific pressure loss increases significantly in comparison with a clean filter, whereby the quantity of vented air decreases and the quality of the indoor air deteriorates. The service life of such filters is relatively short. They are easily damaged at mounting, in use, or when they are being cleaned.

For grease filters also so-called centrifugal filters are used. Present-day centrifugal filters, too, have comparatively low separating capacity, owing to their construction. As examples of inappropriate shaping of the elements in grease filtes, the US-Patents No. 3 834 135, No. 3 910 782 and No. 3 566 585 may be mentioned. Their construction is also unnecessarily complex and the filter is relatively expensive for this reason. The separating capacity of centrifugal filters as well as impact filters varies in practice greatly, depending on the amount of air flow. Attempts have been made to eliminate this drawback by means of adjustable filters. When several adjustable filters are used with different settings in one kitchen, there is a risk that they become mixed up e.g. after washing.

Certain advantages are however achieved with centrifugal filters. The service life of centrifugal filters is in general rather long. The filter efficiency also does not deteriorate as a consequence of repeated washing as is the case with fibre filters. The fire safety of centrifugal filters is also better than that of fibre filters.

In the centrifugal filters known in the art, the air flow turns 180° in the lower cyclone cone, whereafter the air flow exists from the cyclone through the central tube. For this reason the filtering capacity is rather low and does not increase significantly after the change of direction. It is true that the separating capacity can be somewhat improved with the aid of vortices. The centrifugal filter does not store grease in the filter because the separated grease runs efficiently off. However, also other solid particles usually accompany the grease, e.g. dirt, dust, etc., and in this case the respective impurity is no longer freely flowing and fails therefore to run off even a slippery surface, and this is the reason why existing centrifugal filters may becomed clogged.

Currently, also such grease filters are in use in which two consecutive filters are used. These so-called two-phase filters are good in principle, but if in both filters phases are filtering out the same particle size, the latter phase is unnecessary in practice because the filtering capacity only increases about 1% in comparison with the filtering capacity of the first filter.

The subject matter of the invention is based on the problem to create a grease filter with improved filtering capacity and consisting of easily producible air purified modules which do not contain flow cross-section reductions. Besides, the capacity of the grease filter should be easily changeable.

According to the invention, this problem is solved by the features specified in claim 1.

With the grease filter of the invention, all those desirable properties are attained . which are required from a good grease filter. The filtering capacity of the grease filter is good, it is easy to service, it causes no fire hazard, and it is highly reliable in operation.

Advantageous modifications of the invention derive from the subclaims.

The invention is described referring to an embodiment of the invention presented in the figures of the attached drawing, but to which the invention is not intended to be exclusively confined.

Fig. 1 presents an embodiment of the grease filter of the invention in front view.

Fig. 2 presents the grease filter of Fig. 1 in side view.

Fig. 3 presents the grease filter of Fig. 1 in top view.

Fig. 4 shows the section along line IV—IV in Fig. 1.

Fig. 5 presents in cross-section the cell structure used in the grease filter of the invention.

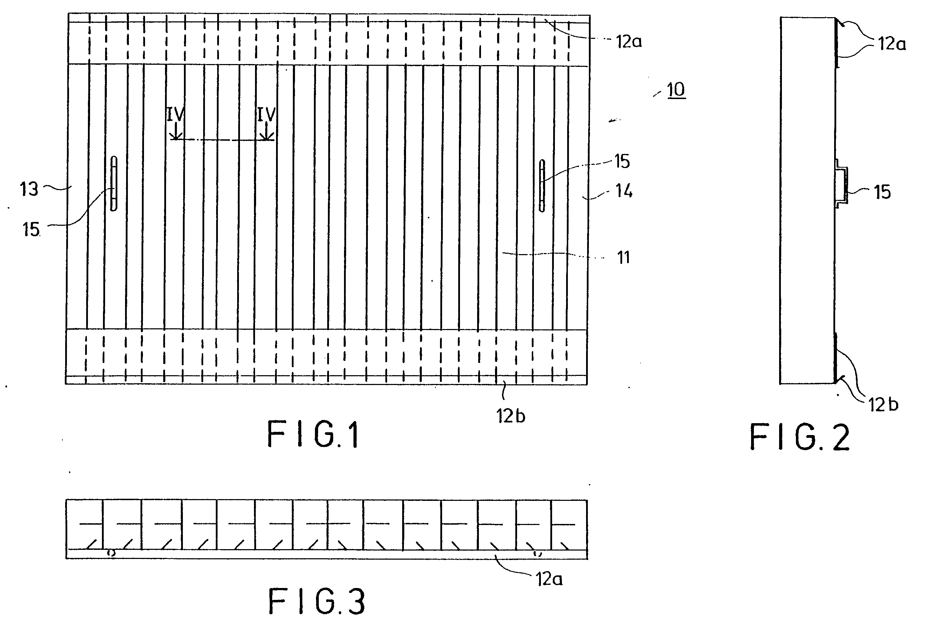

In the embodiment depicted in Figs. 1—3, the grease filter 10 comprises a purifier part 11, a top collar 12a and a lower collar 12b. As side collars 13 and 14 serve sidemost air purifier modules 16. Handles are indicated by reference numeral 15.

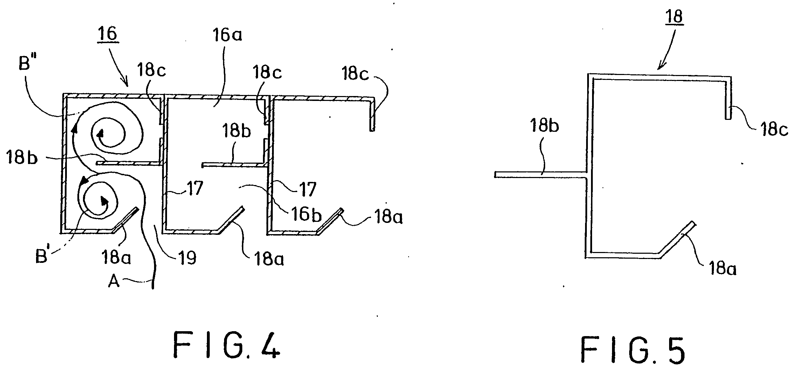

The purifier part 11 has been composed of separate air purifier modules 16 which are shown in Fig. 4. The air purifier modules 16 are separated by a partition 17, to which the separate air purified modules 16 are attached with a beak-like member 18c by any fixing method known in itself in the art. In this embodiment, grease separation from the incoming air flow through the inlet opening 19, in Fig. 4 indicated by the arrow A, takes place in the air purifier modules 16 placed in parallel. As is seen in Fig. 4, the air flow A is caused to rotate in separate vortex chambers 16a, 16b around a centrifugal axis without change of the direction of rotation. As a result, a highly efficient separation effect is obtained with relatively low air flow velocities, the degree of separation of particles over 5 μm being about 95% and that of particles over 2.5 μm is still about 50%.

In the embodiment of Fig. 4, the air purifier modules 16 have been divided with a guide baffle 18b into two vortex chambers 16a and 16b in which vortices in the form of constant helical motions are produced, indicated in Fig. 4 by arrows B' and B''.

In Fig. 5 is presented and advantageous embodiment of the modular design. In this embodiment, the cell structure 18 of the air purifier module 16 includes beak-like members 18a and 18b. The beak-like member 18a of the cell structure 18 of the air purifier module 16 confines, as seen in Fig. 4, an inlet opening 19, of size less than 10 mm, so that most efficient separation possible might be obtained. The size of the inlet opening or slit 19 is advantageously in the range 3—8 mm.

In the grease filter 10 the constant helical motion B may be made such that air emerges from the grease filter 10 at two opposed outlet openings. Furthermore, the constant helical motion B', B'' continues a certain distance after leaving the air purifier 10.

## Claims

1. Grease filter for air venting systems, comprising a purifier part (11) consisting of at least two air purifier modules (16) placed in parallel to each other and each having at least one vortex chamber (16a, 16b) operating on the centrifugal separation principle, thus defining a centrifugal axis, each vortex chamber having an inlet opening (19) parallel to said axis and at least one outlet opening perpendicular to said axis so that the air flow (A) induced by a differential pressure (Δp) across the air purifier modules proceeds through said vortex chamber (16a, 16b) in a constant helical motion directly towards said outlet opening without changing its general direction until it leaves said vortex chamber (16a, 16b) while continuing its helical motion over a certain distance after leaving the air purifier module.

2. Grease filter according to claim 1, wherein each of said air purifier modules (16) is divided up into at least two vortex chambers (16a, 16b) by a guide baffle (18), which also serves to impart said constant helical motion (B' B'') on each air flow (A) entering one of said vortex chambers (16a, 16b).

3. Grease filter according to claim 1 or 2, wherein each of said air purifier modules (16) has a cell structure (18) comprising at least one beak-like member (18a) disposed to form said inflow aperture (19) for the entering air flow (A).

4. Grease filter according to claim 3, wherein the said inlet opening (19) is a slit having a width less than 10 mm, advantageously 3—8 mm.

5. Grease filter according to any one of claims 1 to 4, wherein each vortex chamber has two opposed outlet openings located at the respective ends of said air purifier module (16).

6. Grease filter according to any one of claims 2 to 5, wherein said constant helical motions (B', B'') proceeding in the same axial direction inside said vortex chambers (16a, 16b) have opposite directions of rotation.

## Patentansprüche

1. Fettfilter für Luftreinigungssysteme, das umfaßt: ein Reinigungsteil (11), welches aus wenigstens zwei Luftreinigungsbaueinheiten (16) besteht, die parallel zueinander angeordnet sind und von denen jede wenigstens eine nach dem Zentrifugal-Abscheideprinzip arbeitende Wirbelkammer (16a, 16b), welche folglich eine Zentrifugalachse bestimmt, aufweist, wobei jede Wirbelkammer eine zu dieser Achse parallele Einlaßöffnung (19) und wenigstens eine zu dieser Achse rechtwinklige Auslaßöffnung hat, so daß der durch einen Differenzdruck (Δp) über die Luftreinigungsbaueinheit hinweg induzierte Luftstrom (A) durch diese Wirbelkammer (16a, 16b) in einer konstanten schraubenförmigen Bewegung unmittelbar zu der Auslaßöffnung hin ohne eine Änderung seiner allgemein Richtung fortschreitet, bis er diese wirbelkammer (16a, 16b) verläßt, wobei er seine schraubenförmige Bewegung nach Verlassen der Luftreinigungsbaueinheit über eine bestimmte Entfernung fortsetzt.

2. Fettfilter nach Anspruch 1, wobei jede der Luftreinigungsbaueinheiten (16) in wenigstens zwei Wirbelkammern (16a, 16b) durch eine Lenkwand (18) unterteilt ist, welche auch dazu dient, die konstante schraubenförmige Bewegung (B', B'') jedem in eine der Wirbelkammern (16a, 16b) eintretenden Luftstrom (A) zu erteilen.

3. Fettfilter nach Anspruch 1 oder 2, wobei jeder der Luftreinigungsbaueinheiten (16) eine Zellenkonstruktion (18) hat, die wenigstens ein nasenartig vorspringendes Element (18a) aufweist, das zur Ausbildung der Einlaßöffnung (19) für den eintretenden Luftstrom (A) angeordnet ist.

4. Fettfilter nach Anspruch 3, wobei die genannte Einlaßöffnung (19) ein Schlitz mit einer Weite, die geringer als 10 mm ist, vorteilhafterweise 3—8 mm, ist.

5. Fettfilter nach einem der Ansprüche 1 bis 4, wobei jede Wirbelkammer zwei entgegengesetzte Auslaßöffnungen hat, die an den jeweiligen Stirnseiten der Luftreinigungsbaueinheit (16) angeordnet sind.

6. Fettfilter nach einem der Ansprüche 2 bis 5, wobei die konstanten schraubenförmigen Bewegungen (B′, B′′), die innerhalb der Wirbelkammern (16a, 16b) in derselben axialen Richtung fortschreiten, entgegengesetzte Drehrichtungen haben.

**Revendications**

1. Filtre à graisse pour systèmes d'échappement d'air, comprenant une partie de purification (11) consistant en au moins deux modules de purification d'air (16) montés mutuellement en parallèle et comprenant chacun au moins une chambre tourbillonnaire (16a, 16b) fonctionnant selon le principe de la séparation centrifuge, définissant ainsi un axe de centrifugation, chaque chambre tourbillonnaire comprenant une ouverture d'entrée (19) parallèle audit axe et au moins une ouverture de sortie perpendiculaire audit axe de manière que le courant d'air (A) induit par une pression différentielle (Δp) de chaque côté du module de purification d'air se poursuive dans ladite chambre tourbillonnaire (16a, 16b) selon un mouvement hélicoïdal constant et directement vers lesdites ouvertures de sortie sans modifier sa direction générale jusqu'à ce qu'il quitte ladite chambre tourbillonnaire (16a, 16b) tout en continuant son mouvement hélicoïdal sur une certaine distance après avoir quitté le module de purification d'air.

2. Filtre à graisse selon la revendication 1, dans lequel chacun desdits modules de purification d'air (16) est divisé en au moins deux chambres tourbillonnaires (16a, 16b) par une chicane de guidage (18) qui sert également à transmettre ledit mouvement hélicoïdal constant (B′, B′′) à chaque courant d'air (A) qui pénètre dans l'une desdites chambres tourbillonnaires (16a, 16b).

3. Filtre à graisse selon la revendication 1 ou 2, dans lequel chacun desdits modules de purification d'air (16) comprend une structure de cellule (18) comportant au moins un élément en forme de bec (18a) disposé de façon à former ladite ouverture d'entrée (19) pour le courant d'air entrant (A).

4. Filtre à graisse selon la revendication 3, dans lequel ladite ouverture d'entrée (19) est une fente présentant une largeur inférieure à 10 mm et comprise avantageusement entre 3 et 8 mm.

5. Filtre à graisse selon l'une quelconque des revendications 1 à 4, dans lequel chaque chambre tourbillonnaire comprend deux ouvertures de sortie opposées disposées aux extrémités respectives dudit module de purification d'air (16).

6. Filtre à graisse selon l'une quelconque des revendications 2 à 5, dans lequel lesdits mouvements hélicoïdaux constants (B′, B′′) qui se déplacent dans la même direction axiale à l'intérieur desdites chambres tourbillonnaires (16a, 16b) ont des sens de rotation opposés.

IV　　IV

13

15

12a

10

15

14

11

12b

F I G.1

12a

15

12b

F I G.2

12a

F I G.3

EP 0 172 903 B1

FIG.5

FIG.4